# EUROPÄISCHE PATENTSCHRIFT

(11) **EP 4 424 556 B1**
(45) Veröffentlichungstag und Bekanntmachung des Hinweises auf die Patenterteilung: **17.12.2025**
(21) Anmeldenummer: 24160797.7
(22) Anmeldetag: 01.03.2024
(51) Int. Cl.: B60P 3/00, B60P 3/30

(54) **FUNKTIONSMODUL FÜR EIN MOBILES DEKONTAMINATIONSSYSTEM ZUR GELÄNDEDEKONTAMINATION**
FUNCTIONAL MODULE FOR A MOBILE DECONTAMINATION SYSTEM FOR TERRAIN DECONTAMINATION
MODULE FONCTIONNEL POUR UN SYSTÈME MOBILE DE DÉCONTAMINATION DE TERRAIN

(30) Priorität: 03.03.2023 DE 102023105336
(43) Veröffentlichungstag der Anmeldung: 04.09.2024
(73) Patentinhaber: Kärcher Futuretech GmbH, 71409 Schwaikheim (DE)
(72) Erfinder: Mühleisen, Rainer, 71364 Winnenden (DE); Reinhardt, Ulli, 71364 Winnenden (DE); Fritz, Daniel, 71364 Winnenden (DE)
(74) Vertreter: Witte, Weller & Partner Patentanwälte mbB

(56) Entgegenhaltungen:
- DE-A1- 102007 023 943
- DE-A1- 102020 112 873
- JP-A- 2002 294 648
- US-A1- 2004 057 336
- US-B2- 7 934 680

## Beschreibung

Die vorliegende Erfindung betrifft ein Funktionsmodul für ein mobiles Dekontaminationssystem, das zur Geländedekontamination ausgebildet ist, sowie ein mobiles Dekontaminationssystem , das zusammen mit einem Wassertank und einem solchen Funktionsmodul auf einem Trägerfahrzeug montiert werden kann, um mit dem Trägerfahrzeug während der Fahrt Dekontaminationsmittel auf Straßen, Wege oder andere befahrbare Untergründe zu versprühen.

Der Begriff "Dekontaminieren" ist ein Fachterminus für die gezielte Beseitigung und/oder Unschädlichmachung von radioaktiven, biologischen oder chemischen Substanzen, die ohne derartige Maßnahmen eine Gefahr für die Gesundheit und sogar das Leben von Personen darstellen. Derartige Substanzen können die Folgen von militärischen Anwendungen radioaktiver/nuklearer, biologischer oder chemischer Kampfstoffe oder die Folge von entsprechenden Terroranschlägen sein. Darüber hinaus können derartige Substanzen bei zivilen Unfällen zu einer Kontamination von Personen, Gegenständen und Gebieten führen, bspw. bei einem Unfall in einer Chemiefabrik oder einem Kernkraftwerk. Maßnahmen zur Dekontamination beinhalten das Entstrahlen, Entseuchen und Entgiften, wobei abhängig von der Art der Dekontamination unterschiedliche Dekontaminationsmittel zum Einsatz kommen können.

EP 1 522 454 A2 offenbart ein mobiles Dekontaminationssystem zum Dekontaminieren von Personen und Gegenständen. Das System beinhaltet vier Module, von denen drei jeweils einen verlastbaren Container als Gehäusehülle besitzen. Die drei Einzelcontainer können lösbar zu einem Gesamtcontainer verbunden werden, der dieselben Außenabmessungen aufweist wie ein 20 Fuß ISO-Seefrachtcontainer. Das vierte, nicht-containerisierte Modul kann zum Transport in einem der anderen Module untergebracht werden und dient als hochmobiles Sprühaustragungsgerät vor allem zur Dekontamination von Innenräumen in Gebäuden. Die vier Module des bekannten Systems sind jeweils autark arbeitsfähig und ermöglichen die Dekontamination von Personen, Bekleidung, persönlichen Ausrüstungsgegenständen, Innenräumen und Fahrzeugen. Im bestimmungsgemäßen Betrieb kann der größte Einzelcontainer auf dem Transportfahrzeug verbleiben und insbesondere zum Dekontaminieren von Großfahrzeugen, wie Panzern verwendet werden. In einem Ausführungsbeispiel kann am vorderen Teil des Transportfahrzeuges ein Sprühbalken montiert werden, über den Dekontaminationsmittel aus dem größten Einzelcontainer schräg nach vorne versprüht werden kann, während das Transportfahrzeug bewegt wird. Dementsprechend kann das bekannte System prinzipiell auch zur Geländedekontamination verwendet werden und ist damit sehr universell und flexibel einsetzbar. Allerdings ist die Wasseraufnahmekapazität des bekannten Systems aufgrund der Vielzahl von Aggregaten begrenzt und es ist schwierig, das bekannte System zusammen mit externen, großformatigen Wassertanks im mobilen Betrieb einzusetzen.

WO 2018/108237 A1 offenbart ein hochmobiles Dekontaminationssystem zum manuellen versprühen eines Dekontaminationsmittels. Die benötigten Aggregate sind in einem Gitterahmen untergebracht und beinhalten einen Verbrennungsmotor, einen mit dem Verbrennungsmotor gekoppelten Generator und mehrere Pumpen, die Dekontaminationsmittel aus einem externen Tank ansaugen und über handgehaltene Sprühlanzen versprühen können. Dieses bekannte System ist zur Dekontamination von Personen und kleineren Gegenständen vorgesehen und eignet sich nur begrenzt zur Dekontamination von weitläufigen Geländeflächen.

Wünschenswert ist daher ein System, das eine großflächige Geländedekontamination auf kostengünstige und flexible Weise möglich macht. Als Geländedekontamination wird hier das großflächige Austragen/Versprühen von einem speziellen chemischen Dekontaminationsmittel auf Straßen, Wegen, Feldern und anderem befahrbaren Gelände verstanden, wobei es wichtig ist, dass das Dekontaminationsmittel mit einer definierten Konzentration versprüht wird, um den Dekontaminationseffekt sicherzustellen.

CN 102335490 A offenbart eine Dekontaminationssystem mit einem Trägerfahrzeug, von dem Dekontaminationsmittel aus einem integrierten Tank versprüht wird. Auch in diesem Fall erscheint die Verwendung in Kombination mit einem externen Wassertank im mobilen Betrieb schwierig.

JP 2014/077675 A offenbart ein Dekontaminationssystem zum Dekontaminieren von verstrahltem Erdreich, wobei das Erdreich aufgenommen und unter einer Schutzabdeckung mit einem Dekontaminationsmittel verrührt wird. JP 2013/057189 A offenbart ein weiteres Dekontaminationssystem, bei dem dekontaminiertes Erdreich mit Hilfe von Wasser zu einem wässrigen Schlamm verflüssigt und anschließend aufgesammelt wird. US 2017/101752 A1 offenbart ein Reinigungssystem zum Aufnehmen von organischen Flüssigkeiten von harten Oberflächen. Dabei wird eine wässrige Reinigungslösung auf die Flüssigkeit versprüht und anschließend in einen internen Tank gesaugt. EP 0 773 327 A1 offenbart ein Verfahren und eine Vorrichtung zur Reinigung einer durch umweltschädliche Medien, wie Schmier- oder Kraftstoffen, Bremsflüssigkeit o.ä. kontaminierten und/oder in ihrer Griffigkeit beeinträchtigten Fahrbahn. Auch hier wird ein Lösungsmittel auf die Fahrbahn gesprüht und anschließend abgesaugt. DE 41 29 415 A1 und US 5,979,012 A offenbaren weitere derartige Systeme.

DE 295 06 844 U1 offenbart eine Vorrichtung zum Gießen von Grünanlagen, wie zum Beispiel Rasenflächen, Blumenrabatten, Bäumen, Sträuchern und ähnlichen, zur Unkraut- und Schädlingsbekämpfung, zur Reinigung von verschmutzten Fassaden, Brückenbögen, Leitplanken und anderen Bauwerken sowie für das schonende Aufsprühen von Bakterien zur Aufarbeitung kontaminierter Böden, mit einem schwenkbaren Arm, der an einem Transportfahrzeug angeordnet ist.

JP 2000/212923 A offenbart ein Reinigungssystem zum Reinigen von Straßenbeleuchtungen und Tunnelinnenwänden. Hier wird eine Reinigungsflüssigkeit von einem speziell für diesen Zweck aufgebauten Fahrzeug versprüht. Die Verwendung mit einem externen Tank im mobilen Betrieb ist nicht vorgesehen.

EP 3 613 470 A1 offenbart ein Multifunktionslöschfahrzeug mit einem großen Tank auf einem Transportfahrzeug.

US 7934680 B2 offenbart ein Gerät zum Mischen von Flüssigkeiten und zum Auftragen der gemischten Flüssigkeit auf eine Oberfläche.

DE 1020 0702 3943 A1 offenbart ein fahrbare Waschgeräte, die an Trägerfahrzeugen montiert sind und die dem Reinigen unterschiedlichster Gegenstände im Freien dienen.

JP 2002 2946 48A offenbart ein Wandreinigungsfahrzeug, das zum Reinigen einer Wandoberfläche einer Schallschutzwand verwendet wird, die auf einem Seitenstreifen einer Autostraße installiert ist zum Reinigen einer Gebäudewandoberfläche.

DE 1020 2011 2873 A1 offenbart eine Reinigungsmaschine mit einer Desinfektionsvorrichtung zur Desinfektion von Oberflächen sowohl im zu reinigenden Arbeitsraum als auch in der Reinigungsmaschine selbst.

US 2004 0573 36A1 offenbart ein Gerät zum Mischen und Abgeben eines Dekontaminationsmittels auf Schaum- oder Flüssigkeitsbasis.

Vor diesem Hintergrund ist es eine Aufgabe der vorliegenden Erfindung, ein mobiles Dekontaminationssystem anzugeben, das eine großflächige Geländedekontamination auf kostengünstige und flexible Weise möglich macht.

Gemäß einem Aspekt der vorliegenden Erfindung wird diese Aufgabe durch ein Funktionsmodul der eingangs genannten Art gelöst, mit vier Eckprofilen, die eine rechteckige Bodenaufstandsfläche aufspannen, mit vier Seitenwänden, die an den Eckprofilen jeweils paarweise befestigt sind und zusammen einen quaderförmigen Innenraum definieren, wobei jede der vier Seitenwände eine von dem Innenraum abgewandte Außenseite besitzt, mit einer Vielzahl von Traversen, die den Innenraum in Fächer unterteilen und zusammen mit den Seitenwänden und den Eckprofilen einen lastragenden Rahmen bilden, mit einem ersten Tank, der zum Aufnehmen einer ersten Chemikalie ausgebildet ist und einen ersten Tankauslass besitzt, wobei der erste Tank an dem lastragenden Rahmen in dem Innenraum befestigt ist, mit einem weiteren Tank, der zum Aufnehmen einer zweiten Chemikalie ausgebildet ist und einen weiteren Tankauslass besitzt, wobei der weitere Tank an dem lastragenden Rahmen in dem Innenraum befestigt ist, mit einer erste Dosierpumpe, die in dem Innenraum befestigt ist und über eine erste Rohrleitung saugseitig mit dem ersten Tankauslass verbunden ist, mit einer zweiten Dosierpumpe, die in dem Innenraum befestigt ist und über eine zweite Rohrleitung saugseitig mit dem weiteren Tankauslass verbunden ist, mit einer dritten Rohrleitung, die in dem Innenraum befestigt ist und die mit einem jeweiligen Ausgangsanschluss der ersten Dosierpumpe und der zweiten Dosierpumpe verbunden ist, mit einer ersten Schlauchkupplung, die an einer der Außenseiten angeordnet ist und ein Einlassende der dritten Rohrleitung bildet, mit einer zweiten Schlauchkupplung, die an einer der Außenseiten angeordnet ist und ein Auslassende der dritten Rohrleitung bildet, mit einem Sprühbalken mit einer Vielzahl von nebeneinander angeordneten Sprühdüsen, und mit einem ersten Verbindungsschlauch, wobei der Sprühbalken über den ersten Verbindungsschlauch wahlweise mit der zweiten Schlauchkupplung verbindbar ist, und wobei die erste Schlauchkupplung dazu eingerichtet ist, einen externen Schlauch zu einem separaten Wassertank anzuschließen.

Des Weiteren wird ein mobiles Dekontaminationssystem zur Geländedekontamination vorgeschlagen, mit einem Trägerfahrzeug, auf dem ein Wassertank montiert ist, und mit einem Funktionsmodul der vorstehenden Art, wobei der lasttragende Rahmen an und insbesondere auf dem Wassertank befestigt ist.

In einigen bevorzugten Ausführungsbeispielen ist der Sprühbalken ca. 4m breit. Prinzipiell kann der Sprühbalken aber auch kleiner oder größer sein, wobei er in den bevorzugten Ausführungsbeispielen nicht breiter ist als 5m. Der lasttragende Rahmen weist vorzugsweise mehrere Hubösen auf, die vorteilhaft an den Seitenwänden und/oder an den Traversen befestigt sind. In einem vorteilhaften Ausführungsbeispiel besitzt das Funktionsmodul vier Hubösen. Die Hubösen erleichtern das Verladen des Funktionsmoduls auf das Transportfahrzeug.

Ein Vorteil des neuen Funktionsmoduls liegt darin, dass es zusammen mit herkömmlichen, fahrzeugverlastbaren Wassertanks verwendet werden kann, um auf sehr kostengünstige Weise ein effizientes Dekontaminationssystem zur Geländedekontamination zu erhalten. In bevorzugten Ausführungsbeispielen können vorhandene Standard-Wassertransportmodule, wie sie viele Armeen, technische Hilfskräfte oder Feuerwehren besitzen, mit Hilfe des neuen Funktionsmoduls sehr einfach und kostengünstig zu einem großflächig nutzbaren Dekontaminationsfahrzeug umgerüstet werden. Das beschriebene Funktionsmodul beinhaltet alle notwendigen Aggregate, insbesondere die Dosierpumpen, und Komponenten, wie insbesondere die Chemikalientanks und den Sprühbalken, sowie alle benötigten Ventile für das Anmischen und Austragen des jeweils benötigten Dekontaminationsmittels, so dass das Bereitstellen und schnelle Verbinden mit einem externen Wassertank genügt, um ein funktionsfähiges Dekontaminationssystem zu erhalten. Andererseits verzichtet des neue Funktionsmodul auf einen integrierten Wassertank, wodurch es sehr kompakt ausgebildet werden kann. Die - vorzugsweise geschlossenen - Seitenwände schützen die Aggregate, Komponenten und Dekontaminationsmitteltanks beim verladen und im Betrieb, weshalb das Funktionsmodul sehr robust ist und gerade auch unter Stressbedingungen nach einer Verstrahlung, Verseuchung oder Vergiftung mit überschaubarem Aufwand schnell in Betrieb genommen werden kann. Die von außen an den Seitenwänden leicht zugänglichen Schlauchkupplungen tragen zu der schnellen und einfachen Inbetriebnahme vorteilhaft bei. Das neue Funktionsmodul ermöglicht daher auf kostengünstige Weise eine flexible Verwendung. Die oben genannte Aufgabe ist vollständig gelöst.

In einer bevorzugten Ausgestaltung besitzt das Funktionsmodul ferner eine Wasserpumpe, die strömungstechnisch in der dritten Rohrleitung angeordnet ist und die dazu eingerichtet ist, Wasser aus dem separaten Wassertank über die erste Schlauchkupplung anzusaugen und zu der zweiten Schlauchkupplung zu befördern.

Diese Ausgestaltung macht das neue Funktionsmodul noch autarker, weil es mit nahezu jedem fahrzeugverlastbaren Wassertank betrieben werden kann, unabhängig davon, ob der verwendete Wassertank eine geeignete Wasserpumpe besitzt oder nicht. Die Wasserpumpe ist in dem Funktionsmodul vorteilhaft so integriert, dass sie im Fahrbetrieb des Transportfahrzeugs betrieben werden kann, was für die vorgesehene Verwendung als Dekontaminationssystem zur Geländedekontamination von Bedeutung ist. Im Gegensatz dazu können manche Wasserpumpen von bekannten Wassertanks nur im stationären Betrieb arbeiten.

In einer weiteren Ausgestaltung ist die Wasserpumpe eine hydraulisch angetriebene Wasserpumpe. In einer weiteren Ausgestaltung besitzt das Funktionsmodul ferner zwei Hydraulikanschlüsse, die die an einer der Außenseiten abgeordnet sind und zu der Wasserpumpe führen .

Diese Ausgestaltungen ermöglichen einen sehr effizienten Betrieb des neuen Funktionsmoduls und insbesondere der integrierten Wasserpumpe über den Antriebsmotor des Transportfahrzeugs. Prinzipiell könnte die Wasserpumpe in anderen Ausgestaltungen eine elektrisch betriebene Wasserpumpe sein. Eine elektrische Wasserpumpe würde jedoch das elektrische Bordnetz des Transportfahrzeugs belasten und kann daher zu einer begrenzten Reichweite und Verwendbarkeit führen. Andererseits kann das neue Funktionsmodul in dieser Ausgestaltung ohne eigenen Generator zur Stromerzeugen ausgebildet sein, was die Kosten und das Gewicht des Funktionsmoduls reduziert. Vorteilhaft besitzen viele schwere Transportfahrzeuge bereits einen Hydraulikkreis, der für verschiedene Anwendungen genutzt werden kann, etwa ein hydraulisch betätigter Kran und/oder eine hydraulisch betätigte Ladebordwand. Diese vorhandenen Hydraulikkreise können mit der vorliegenden Ausgestaltung sehr vorteilhaft genutzt werden. Die Hydraulikanschlüsse, die an einer der Außenseiten des Funktionsmoduls abgeordnet sind, erleichtern auf vorteilhafte Weise die Inbetriebnahme und Demontage des Funktionsmoduls nach einem Einsatz.

In einer weiteren Ausgestaltung besitzt der erste Tank eine erste Einfüllöffnung, die mit einem manuell betätigbaren Verschluss verschlossen ist. Vorzugsweise besitzt auch der weitere Tank eine solche Einfüllöffnung.

Die Ausgestaltung erleichtert das Befüllen bzw. Nachfüllen der Chemikalien, die zum Mischen bzw. herstellen des geeigneten Dekontaminationsmittels benötigt werden. Insbesondere macht es diese Ausgestaltung möglich, die benötigten Chemikalien in handelsüblichen Gebinden, Kanistern oder dergleichen mitzuführen und zu beschaffen. Alternativ oder ergänzend hierzu wäre es denkbar, die handelsüblichen Gebinde, Kanister oder dergleichen über eine geeignete Aufnahme in das Funktionsmodul zu integrieren. Die bevorzugten Ausgestaltung ermöglicht demgegenüber einen robusteren und langlebigeren Aufbau und einen sicheren Betrieb. Bevorzugt sind die Chemikalientanks aus Edelstahl. In einigen vorteilhaften Ausführungsbeispielen besitzt das Transportfahrzeug einen auf dem Transportfahrzeug angeordneten Lastenkran, der es möglich macht, das Funktionsmodul "mit Bordmitteln" auf und abzuladen. Vorteilhaft können die Chemikalientanks in diesen Ausführungsbeispielen bei abgesetztem Funktionsmodul aus handelsüblichen Gebinden/Kanistern einfach und schnell befüllt werden, bevor das Funktionsmodul auf das Transportfahrzeug gehoben wird.

In einer weiteren Ausgestaltung besitzt der erste Tank eine zweite Einfüllöffnung, an die eine Spülleitung angeschlossen ist, wobei die Spülleitung über ein Ventil mit der dritten Rohrleitung verbunden ist. Vorzugsweise besitzt auch der weitere Tank eine solche zweite Einfüllöffnung.

Die Ausgestaltung erleichtert auf sehr kostengünstige Weise das Reinigen der Chemikalientanks, ohne dass diese aus dem Funktionsmodul ausgebaut bzw. entnommen werden müssen. Vorteilhaft trägt diese Ausgestaltung dazu bei, eine hohe Betriebssicherheit zu erhalten.

In einer weiteren Ausgestaltung ist an dem ersten Tankauslass ein Absperrventil angeordnet, das dazu eingerichtet ist, den ersten Tank vollständig zu entleeren, während er in dem Innenraum befestigt ist. In einigen vorteilhaften Ausführungsbeispielen führt das Absperrventil zu einem Drainageabfluss, der einen Bypass zu der dritten Rohrleitung bildet.

Diese Ausgestaltung ermöglicht eine schnelle und gezielte Entleerung der Chemikalientanks nach einem Einsatz und trägt zu einem sicheren und gefahrlosen Transport des neuen Funktionsmoduls vorteilhaft bei.

In einer weiteren Ausgestaltung beinhaltet der weitere Tank einen ersten weiteren Tank und einen zweiten weiteren Tank, die fluidisch parallel an die dritte Rohrleitung angeschlossen sind. Vorzugsweise sind der erste weitere Tank und der zweite weitere Tank in einigen Ausführungsbeispielen gleich groß. Des Weiteren sind der erste Tank, der erste weitere Tank und der zweite weiteren Tank in einigen bevorzugten Ausführungsbeispielen jeweils gleich groß.

Diese Ausgestaltung erleichtert eine flexible Dosierung der Chemikalien zum Herstellen des geeigneten Dekontaminationsmittels. In einigen bevorzugten Ausführungsbeispielen ist die erste Chemikalie Wofasteril und die zweite Chemikalie ist Alcapur, die vorteilhaft mit einem Mischungsverhältnis von 1:2 gemischt und mit Wasser verdünnt werden. Beispielsweise kann ein geeignetes Dekontaminationsmittel 4% Wofasteril, 8% Alcapur und ca. 88% Wasser beinhalten. Die Ausgestaltung vereinfacht die Herstellung eines solchen Dekontaminationsmittels unter Einsatzbedingungen und macht es möglich, auf geeichte Waagen oder andere Messmittel zu verzichten.

In einer weiteren Ausgestaltung beinhalten die Eckprofile Container-Eckbeschläge, die dazu eingerichtet sind, eine Twistlockverbindung mit einem Seefrachtcontainer zu ermöglichen.

Vorteilhaft erfüllen die Container-Eckbeschläge dieser Ausgestaltung die Anforderungen der Internationalen Norm ISO 1161. Die Bodenaufstandsfläche entspricht in vorteilhaften Ausführungsbeispielen der Bodenaufstandsfläche eines 20 Fuß Seefrachtcontainers nach ISO 668. Die Ausgestaltung ermöglicht einen sehr universellen und vor allem sehr sicheren Transport des neuen Funktionsmoduls mit handelsüblichen Transportfahrzeugen. Des Weiteren ermöglicht diese Ausgestaltung eine sichere Fixierung des neuen Funktionsmoduls an jedem Wassertank, der nach ISO 668 ausgebildet ist. Derartige Wassertanks sind bei einigen Armeen und Hilfsdiensten bereits vorhanden. Vorteilhaft ist die Höhe des neuen Funktionsmoduls wesentlich geringer als die Höhe eines handelsüblichen Seefrachtcontainers nach ISO 1161, so dass das Funktionsmodul ohne Weiteres auf einem solchen Wassertank montiert und transportiert werden kann. In bevorzugten Ausführungsbeispielen besitzt das Funktionsmodul eine Bodenaufstandsfläche, die derjenigen eines 20 Fuß Seefrachtcontainers nach ISO 668 entspricht, aber die Höhe des Funktionsmoduls ist kleiner als 1m. Vorzugsweise liegt die Höhe in einem Bereich zwischen 50cm und 75cm, insbesondere bei etwa 63cm.

In einer weiteren Ausgestaltung besitzt das Funktionsmodul einen Elektroanschluss, der an einer der Außenseiten angeordnet ist, und einen Elektroverteiler, der den Elektroanschluss mit der ersten und mit der zweiten Dosierpumpe verbindet, wobei der Elektroverteiler in dem Innenraum angeordnet ist.

Diese Ausgestaltung trägt vorteilhaft dazu bei, dass das neue Funktionsmodul sehr einfach und schnell in Betrieb genommen werden kann. Der integrierte Elektroverteiler minimiert die notwendigen Schritte zum elektrischen Anschluss des neuen Funktionsmoduls.

In einer weiteren Ausgestaltung besitzt das Funktionsmodul eine Fernbedienung, die dazu eingerichtet ist, die Dosierpumpen von außerhalb des Innenraums zu bedienen. Vorteilhaft ist die Fernbedienung ferner dazu eingerichtet ist, die vorzugsweise ebenfalls integrierte Wasserpumpe von außerhalb des Innenraums zu bedienen. In bevorzugten Ausführungsbeispielen kann die Fernbedienung per Kabel von außen über den Elektroanschluss an den Elektroverteiler angeschlossen werden. Alternativ oder ergänzend kann die Fernbedienung in einigen Ausführungsbeispielen per Funk mit den Dosierpumpen und der bevorzugten Wasserpumpe verbunden sein. Bevorzugt ist die Fernbedienung dazu eingerichtet, in der Fahrerkabine des Transportfahrzeugs platziert zu werden. Die Ausgestaltung erleichtert einen sicheren und situationsangepassten Betrieb des neuen Funktionsmoduls in kontaminiertem Gelände.

In einer weiteren Ausgestaltung besitzt das Funktionsmodul eine Anzahl von Abdeckplatten und Abdeckklappen, die zusammen eine Gehäuseoberseite oberhalb von dem Innenraum bilden, wobei ein zentraler Bereich des Innenraums ausgespart ist.

Durch die Abdeckplatten und Abdeckklappen sind die integrierten Aggregate und Komponenten gegen Wettereinflüsse geschützt. Das Funktionsmodul ist noch robuster. Die Abdeckklappen bieten außerdem Staufächer für diverse Komponenten, wie insbesondere den Sprühbalken und den ersten Verbindungsschlauch. Dass der zentrale Bereich des Innenraums ausgespart ist, ermöglicht einen einfachen Zugang zu dem oberen zentralen Bereich eines Wassertanks, auch wenn das Funktionsmodul auf diesem montiert ist. Viele großformatige Wassertanks ermöglichen eine Befüllung, Wartung, Reinigung und/oder Bedienung von oben. Das Funktionsmodul dieser Ausgestaltung erlaubt den ungehinderten Zugang zu den entsprechende Komponenten derartiger Wassertanks und begünstigt daher einen flexiblen Einsatz.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Ausführungsbeispiel des neuen Funktionsmoduls, wobei einige Teile aus Gründen der Übersichtlichkeit nicht dargestellt sind,
- Fig. 2: das Funktionsmodul aus Fig. 1, wobei einige Klappen geöffnet sind, um den Zugang zu den Fächern im Innenraum zu ermöglichen,
- Fig. 3: ein vereinfachtes Funktionsblockschaltbild zu dem Ausführungsbeispiel aus Fig. 1, und
- Fig. 4: eine Transportfahrzeug mit einem Standard-Wassertank und dem Funktionsmodul aus Fig. 1.

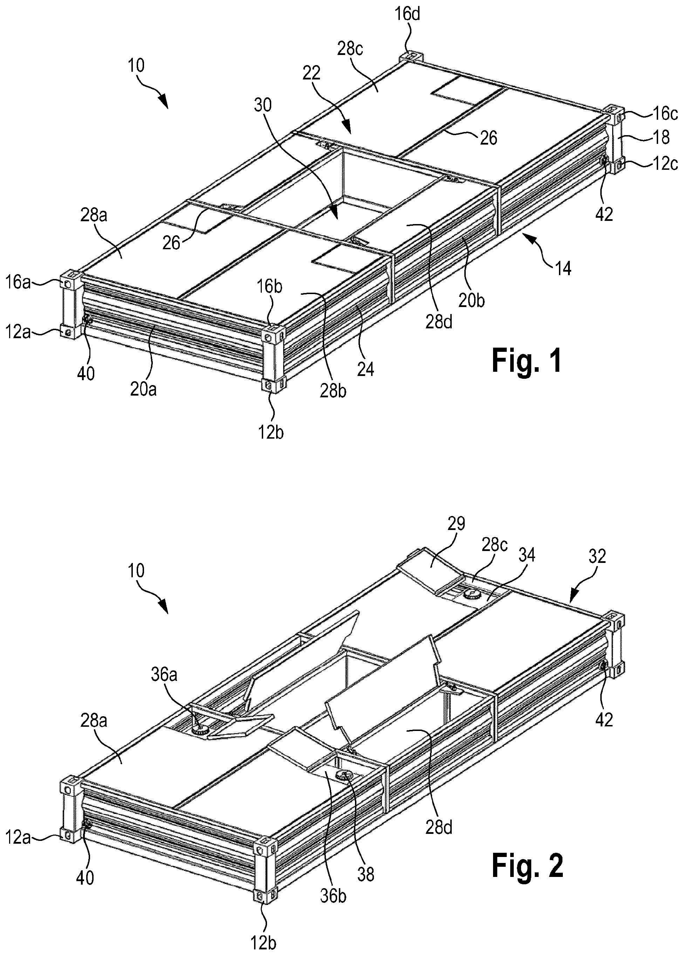

In den Figuren 1 bis 4 ist ein bevorzugtes Ausführungsbeispiel des neuen Funktionsmoduls in seiner Gesamtheit mit der Bezugsziffer 10 bezeichnet. Das Funktionsmodul 10 besitzt vier bodenseitige Eckprofile 12a, 12b, 12c, die eine rechteckige Bodenaufstandsfläche 14 aufspannen. Des Weiteren besitzt das Funktionsmodul 10 in diesem Ausführungsbeispiel vier weitere Eckprofile 16a, 16b, 16c, 16d, von denen jeweils eins kongruent über einem der bodenseitige Eckprofile 12a, 12b, 12c angeordnet ist. Die jeweils paarweise übereinander angeordneten Eckprofile sind über einen jeweiligen Stahlträger 18 miteinander verbunden und bilden jeweils eine vertikale Außenkante des Funktionsmoduls 10. In dem dargestellten Ausführungsbeispiel ist die Bodenaufstandsfläche ca. 6.058mm x 2.438mm und entspricht somit der Bodenaufstandsfläche eines handelsüblichen 20 Fuß Seefrachtcontainers nach ISO 688, so dass das Funktionsmodul 10 ohne Weiteres auf einem handelsübliche Containerlastwagen verladen und transportiert werden kann. Die Eckprofile 12a, 12b, 12c ermöglichen in an sich bekannter Weise eine Twistlockverbindung mit dem Containeraufnahmepunkten des Lastwagens und/oder einem anderen 20 Fuß Container nach ISO 688.

Mit den vier Eckprofilen sind hier vier vorzugsweise geschlossene Seitenwände jeweils paarweise verschweißt. Aus Gründen der Übersichtlichkeit sind hier nur eine kurze Seitenwand 20a und eine lange Seitenwand 20b bezeichnet. Die Seitenwände definieren einen quaderförmigen Innenraum 22. Jede der vier Seitenwände besitzt eine von dem Innenraum 22 abgewandte Außenseite 24.

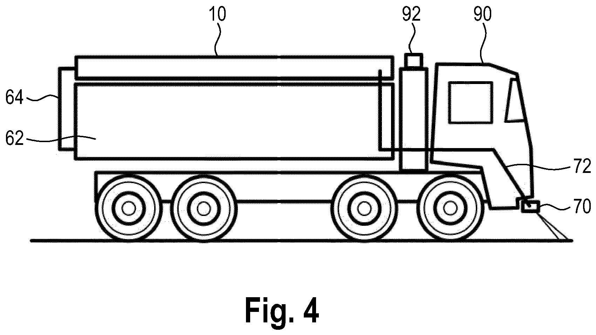

In dem Innenraum 22 sind mehrere Traversen 26 eingeschweißt, die den Innenraum in mehrere Fächer 28a, 28b, 28c unterteilen. Über den Fächern sind Abdeckplatten und Abdeckklappen 29 angeordnet, die zusammen eine Gehäuseoberseite oberhalb von dem Innenraum 22 bilden. Ein zentraler Bereich 30 bzw. ein zentrales Fach ist hier freigehalten und ermöglicht einen Durchgriff durch das Funktionsmodul 10 von oben zu einem etwaig darunter angeordneten Wassertank (vgl. nachfolgende Fig. 4). Die Traversen 26 bilden zusammen den Eckprofilen 12, 16 und den Seitenwänden 20 einen lastragenden Rahmen 32 (Fig. 2).

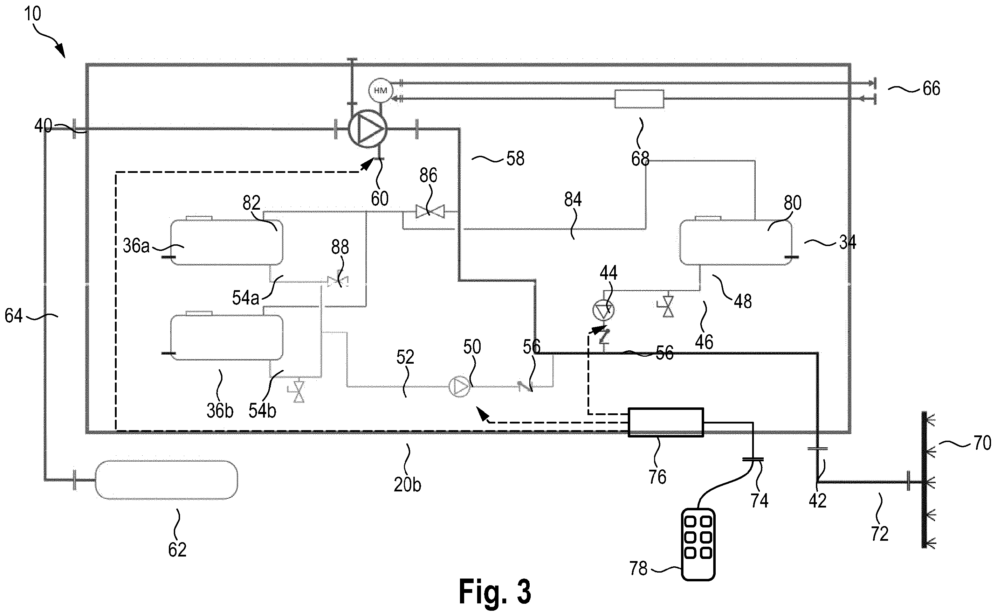

Das Funktionsmodul besitzt in diesem Ausführungsbeispiel drei Tanks 34, 36a, 36b zum Aufnehmen von Chemikalien. Jeder der Tanks besitzt hier einen manuell betätigbaren Verschluss, wie insbesondere den Schraubverschluss 38. Die weiteren Anschlüsse und die Funktion der Tanks wird weiter unten mit Bezug auf Fig. 3 näher erläutert. Mit der Bezugsziffer 40 ist eine erste Schlauchkupplung bezeichnet, die an der Außenseite der Seitenwand 20a angeordnet ist. Mit der Bezugsziffer 42 ist eine zweite Schlauchkupplung bezeichnet, die an der Außenseite der Seitenwand 20b angeordnet ist.

Fig. 3 zeigt ein vereinfachtes Funktionsschaltbild des Funktionsmoduls 10. Gleiche Bezugszeichen bezeichnen dieselben Elemente wie zuvor. Wie man in Fig. 3 erkennen kann, besitzt das Funktionsmodul 10 eine erste Dosierpumpe 44, die über eine erste Rohrleitung 46 saugseitig mit einem ersten Tankauslass 48 des Chemikalientanks 34 verbunden ist. Ferner besitzt das Funktionsmodul 10 eine zweite Dosierpumpe 50, die über eine zweite Rohrleitung 52 saugseitig mit einem Tankauslass 54a des Chemikalientanks 36a und parallel dazu mit einem Tankauslass 54b des Chemikalientanks 36b verbunden ist. Die jeweilige Druckseite der Dosierpumpen 44, 50 mündet über ein jeweiliges Rückschlagventil 56 in eine dritte Rohrleitung 58, die von der ersten Schlauchkupplung 40 zu der zweiten Schlauchkupplung 42 führt.

In diesem Ausführungsbeispiel ist in der Durchflussrichtung der dritten Rohrleitung 58 eine bevorzugte Wasserpumpe 60 angeordnet. Die Wasserpumpe 60 ist dazu eingerichtet, Wasser aus einem externen Wassertank 62 über eine Schlauchleitung 64 und die erste Schlauchkupplung 40 anzusaugen und zu dem Auslass an der zweiten Schlauchkupplung 42 zu befördern. In diesem bevorzugten Ausführungsbeispiel ist die Wasserpumpe 60 eine hydraulisch angetriebene Wasserpumpe. Zwei Hydraulikanschlüsse mit einem Hydraulikzulauf und einem Hydraulikrücklauf sind bei der Bezugsziffer 66 dargestellt. Bezugsziffer 68 bezeichnet eine Hydraulikregelung, die in dem Funktionsmodul 10 vorzugsweise integriert ist, um die hydraulisch angetriebene Wasserpumpe mit dem jeweils gewünschten Betriebsdruck zu versorgen. In den bevorzugten Ausführungsbeispielen können die Hydraulikanschlüsse 66 mit dem Hydraulikkreis eines Transportfahrzeugs (hier nicht dargestellt) verbunden werden, so dass die Wasserpumpe 60 im Fahrbetrieb des Transportfahrzeugs hydraulisch angetrieben werden kann, ohne das elektrische Bordnetz des Transportfahrzeugs zu belasten.

Mit der Bezugsziffer 70 ist ein Sprühbalken mit einer Vielzahl von nebeneinander angeordneten Sprühdüsen bezeichnet. Der Sprühbalken 70 ist dazu eingerichtet, an der Front des Trägerfahrzeugs (vgl. Fig. 4) montiert zu werden, wie das beispielsweise in der eingangs genannten EP 1 522 454 A2 für das dort beschriebene Dekontaminationssystem gezeigt ist. In den bevorzugten Ausführungsbeispielen kann der Sprühbalken 70 wahlweise und lösbar an der Front des Trägerfahrzeugs montiert werden, wenn das Funktionsmodul 10 zusammen mit dem externen Wassertank 62 in Betrieb genommen werden soll. Dazu wird der Sprühbalken über einen Verbindungsschlauch 72 mit der zweiten Schlauchkupplung an der Außenseite 24 verbunden. Nach einem Einsatz kann der Sprühbalken 70 in den bevorzugten Ausführungsbeispielen demontiert und in einem der Fächer verstaut werden, beispielsweise in dem Fach 28d (vgl. Fig. 2).

Mit der Bezugsziffer 74 ist ein Elektroanschluss bezeichnet, der an einer der Außenseiten 24 angeordnet ist und zu einem Elektroverteiler 76 in dem Innenraum 22 führt. An dem Elektroanschluss 74 ist hier u.a. eine Fernbedienung 78 angeschlossen, die bevorzugt in der Fahrerkabine des Transportfahrzeugs platziert werden kann, um die Aggregate des Funktionsmoduls 10, insbesondere also die Dosierpumpen 44, 50 und die Wasserpumpe 60 zu bedienen. Die elektrische Verbindung von dem Elektroverteiler 76 zu den Aggregaten ist hier aus Gründen der Übersichtlichkeit vereinfacht dargestellt. Insbesondere kann die Hydraulikregelung 68 ebenfalls an den Elektroverteiler 76 angeschlossen sein, um die Wasserpumpe 6 über die Fernbedienung 78 zu bedienen.

Wie in Fig. 3 weiterhin dargestellt ist, besitzen die Tanks 34, 36a, 36b in diesem Ausführungsbeispiel jeweils eine zweite Einfüllöffnung 80, 82, an die eine Spülleitung 84 angeschlossen ist. Die Spülleitung 84 über ein Ventil 86 mit der dritten Rohrleitung 58 verbunden und macht es möglich, die Tanks 34, 36a, 36b nach einer Benutzung wahlweise über die Rohrleitung 58 mit Wasser aus dem externen Tank 62 zu spülen. In den bevorzugten Ausführungsbeispielen ist am Ausgang der Tanks 34, 36a, 36b außerdem jeweils ein Sperrventil 88, beispielsweise in Form eines Kugelhahns, angeordnet. Das Sperrventil 88 ermöglicht eine einfache und vollständige Entleerung des betreffenden Tanks über eine Art Drainageabfluss, der einen Bypass zu der dritten Rohrleitung 58 bildet.

Fig. 4 zeigt in einer stark vereinfachten Darstellung ein Transportfahrzeug 90 mit einem Wassertank 62, der über den externen Schlauch 64, an das Funktionsmodul 10 angeschlossen ist. Das Funktionsmodul 10 ist hier auf dem Wassertank 62 angeordnet und mit Hilfe der Eckprofile 12 mit einer Twistlockverbindung befestigt. Der Sprühbalken 70 ist vorne im Bereich der Stoßstange an dem Transportfahrzeug 90 montiert.

In bevorzugten Ausführungsbeispielen besitzt das Transportfahrzeug 90 einen hydraulisch betriebenen Kran 92, der es möglich macht, den Wassertank 62 und das Funktionsmodul 10 auf das Transportfahrzeug 90 zu heben und wieder abzuladen.

## Patentansprüche

1. Funktionsmodul für ein mobiles Dekontaminationssystem zur Geländedekontamination,
- mit vier Eckprofilen (12), die eine rechteckige Bodenaufstandsfläche (14) aufspannen,
- mit vier Seitenwänden (20), die an den Eckprofilen (12) jeweils paarweise befestigt sind und zusammen einen quaderförmigen Innenraum (22) definieren, wobei jede der vier Seitenwände (20) eine von dem Innenraum 822) abgewandte Außenseite (24) besitzt,
- mit einer Vielzahl von Traversen (26), die den Innenraum (22) in Fächer (28) unterteilen und zusammen mit den Seitenwänden (20) und den Eckprofilen (12) einen lastragenden Rahmen (32) bilden,
- mit einem ersten Tank (34), der zum Aufnehmen einer ersten Chemikalie ausgebildet ist und einen ersten Tankauslass (48) besitzt, wobei der erste Tank (34) an dem lastragenden Rahmen (32) in dem Innenraum (22) befestigt ist,
- mit einem weiteren Tank (36a, 36b), der zum Aufnehmen einer zweiten Chemikalie ausgebildet ist und einen weiteren Tankauslass (54a, 54b) besitzt, wobei der weitere Tank (36a, 36b) an dem lastragenden Rahmen (32) in dem Innenraum (22) befestigt ist,
- mit einer erste Dosierpumpe (44), die in dem Innenraum (22) befestigt ist und über eine erste Rohrleitung (46) saugseitig mit dem ersten Tankauslass (48) verbunden ist,
- mit einer zweiten Dosierpumpe (50), die in dem Innenraum (22) befestigt ist und über eine zweite Rohrleitung (52) saugseitig mit dem weiteren Tankauslass (54a, 54b) verbunden ist,
- mit einer dritten Rohrleitung (58), die in dem Innenraum (22) befestigt ist und die mit einem jeweiligen Ausgangsanschluss der ersten Dosierpumpe (44) und der zweiten Dosierpumpe (50) verbunden ist,
**gekennzeichnet durch**
- eine erste Schlauchkupplung (40), die an einer der Außenseiten (24) angeordnet ist und ein Einlassende der dritten Rohrleitung (58) bildet,
- eine zweite Schlauchkupplung (42), die an einer der Außenseiten (24) angeordnet ist und ein Auslassende der dritten Rohrleitung (58) bildet,
- einen Sprühbalken (70) mit einer Vielzahl von nebeneinander angeordneten Sprühdüsen, und
- einen ersten Verbindungsschlauch (72),
wobei der Sprühbalken (70) über den ersten Verbindungsschlauch (72) wahlweise mit der zweiten Schlauchkupplung (42) verbindbar ist, und wobei die erste Schlauchkupplung (40) dazu eingerichtet ist, einen externen Schlauch (64) zu einem separaten Wassertank (62) anzuschließen.

2. Funktionsmodul nach Anspruch 1, ferner mit einer Wasserpumpe (60), die in der dritten Rohrleitung (58) angeordnet ist und die dazu eingerichtet ist, Wasser aus dem separaten Wassertank (62) über die erste Schlauchkupplung (40) anzusaugen und zu der zweiten Schlauchkupplung (42) zu befördern.

3. Funktionsmodul nach Anspruch 2, wobei die Wasserpumpe (60) eine hydraulisch angetriebene Wasserpumpe ist.

4. Funktionsmodul nach Anspruch 3, ferner mit zwei Hydraulikanschlüssen (66), die zu der Wasserpumpe (60) führen und die an einer der Außenseiten (24) abgeordnet sind.

5. Funktionsmodul nach einem der Ansprüche 1 bis 4, wobei der erste Tank (34) eine erste Einfüllöffnung besitzt, die mit einem manuell betätigbaren Verschluss (38) verschlossen ist.

6. Funktionsmodul nach einem der Ansprüche 1 bis 5, wobei der erste Tank (34) eine zweite Einfüllöffnung (80) besitzt, an die eine Spülleitung (84) angeschlossen ist, wobei die Spülleitung (84) über ein Ventil (86) mit der dritten Rohrleitung (58) verbunden ist.

7. Funktionsmodul nach einem der Ansprüche 1 bis 6, wobei an dem ersten Tankauslass (48) ein Absperrventil angeordnet ist, das dazu eingerichtet ist, den ersten Tank (48) vollständig zu entleeren, während er in dem Innenraum (22) befestigt ist.

8. Funktionsmodul nach einem der Ansprüche 1 bis 7, wobei der weitere Tank (36a, 36b) einen ersten weiteren Tank (36a) und einen zweiten weiteren Tank (36b) beinhaltet, die fluidisch parallel an die dritte Rohrleitung (58) angeschlossen sind.

9. Funktionsmodul nach einem der Ansprüche 1 bis 8, wobei die Eckprofile (12) Container-Eckbeschläge beinhalten, die dazu eingerichtet sind, eine Twistlockverbindung mit einem Seefrachtcontainer zu ermöglichen.

10. Funktionsmodul nach einem der Ansprüche 1 bis 9, ferner mit einem Elektroanschluss (74), der an einer der Außenseiten (24) angeordnet ist, und mit einem Elektroverteiler (76), der den Elektroanschluss (74) mit der ersten und mit der zweiten Dosierpumpe (44, 50) verbindet, wobei der Elektroverteiler (76) in dem Innenraum (22) angeordnet ist.

11. Funktionsmodul nach einem der Ansprüche 1 bis 10, ferner mit einer Fernbedienung (78), die dazu eingerichtet ist, die Dosierpumpen (44, 50) von außerhalb des Innenraums (22) zu bedienen.

12. Funktionsmodul nach einem der Ansprüche 1 bis 11, ferner mit einer Anzahl von Abdeckplatten und Abdeckklappen (29), die zusammen eine Gehäuseoberseite oberhalb von dem Innenraum (22) bilden, wobei ein zentraler Bereich (30) des Innenraums (22) ausgespart ist.

13. Mobiles Dekontaminationssystem zur Geländedekontamination, mit einem Trägerfahrzeug, auf dem ein Wassertank (62) montiert ist, und mit einem Funktionsmodul nach einem der Ansprüche 1 bis 12, wobei der lasttragende Rahmen (32) an dem Wassertank (62) befestigt ist.

## Claims

1. A functional module for a mobile decontamination system for terrain decontamination,
- comprising four corner profiles (12) that span a rectangular base area (14),
- comprising four side walls (20) that are each attached in pairs to the corner profiles (12) and together define a cuboid-shaped interior space (22), wherein each of the four side walls (20) has an outer side (24) facing away from the interior space (22),
- comprising a plurality of cross members (26) which divide the interior space (22) into compartments (28) and, together with the side walls (20) and the corner profiles (12), form a load-bearing frame (32),
- comprising a first tank (34) designed to hold a first chemical and having a first tank outlet (48), wherein the first tank (34) is attached to the load-bearing frame (32) in the interior space (22),
- comprising a further tank (36a, 36b) designed to hold a second chemical and having a further tank outlet (54a, 54b), wherein the further tank (36a, 36b) is attached to the load-bearing frame (32) in the interior space (22),
- comprising a first metering pump (44) which is arranged in the interior space (22) and is connected, on the suction side, to the first tank outlet (48) via a first pipe (46),
- comprising a second metering pump (50) which is arranged in the interior space (22) and is connected, on the suction side, to the further tank outlet (54a, 54b) via a second pipe (52),
- comprising a third pipe (58) which is arranged in the interior space (22) and is connected to a respective outlet port of the first metering pump (44) and of the second metering pump (50),
**characterized by**
- a first hose coupling (40) which is arranged on one of the outer sides (24) and forms an inlet end of the third pipe (58),
- a second hose coupling (42) which is arranged on one of the outer sides (24) and forms an outlet end of the third pipe (58),
- a spray bar (70) comprising a plurality of spray nozzles arranged next to each other, and
- a first connecting hose (72),
wherein the spray bar (70) can selectively be connected to the second hose coupling (42) via the first connecting hose (72), and wherein the first hose coupling (40) is designed to connect an external hose (64) to a separate water tank (62).

2. The functional module according to claim 1, further comprising a water pump (60) which is arranged in the third pipe (58) and which is designed to suck water from the separate water tank (62) via the first hose coupling (40) and to convey it to the second hose coupling (42).

3. The functional module according to claim 2, wherein the water pump (60) is a hydraulically driven water pump.

4. The functional module according to claim 3, further comprising two hydraulic connections (66) which lead to the water pump (60) and are arranged on one of the outer sides (24).

5. The functional module according to one of claims 1 to 4, wherein the first tank (34) has a first filling opening which is closed by a manually operable closure (38).

6. The functional module according to one of claims 1 to 5, wherein the first tank (34) has a second filling opening (80) to which a flushing line (84) is connected, wherein the flushing line (84) is connected to the third pipe (58) via a valve (86).

7. The functional module according to one of claims 1 to 6, wherein a shut-off valve is arranged at the first tank outlet (48), which shut-off valve is configured to completely empty the first tank (48) while it is secured in the interior space (22).

8. The functional module according to one of claims 1 to 7, wherein the further tank (36a, 36b) comprises a first further tank (36a) and a second further tank (36b) which are connected fluidically in parallel to the third pipe (58).

9. The functional module according to one of claims 1 to 8, wherein the corner profiles (12) include container corner fittings that are designed to enable a twist lock connection with a sea freight container.

10. The functional module according to one of claims 1 to 9, further comprising an electrical connector (74) arranged on one of the outer sides (24) and an electrical distributor (76) connecting the electrical connector (74) to the first and second metering pumps (44, 50), wherein the electrical distributor (76) is arranged in the interior space (22).

11. The functional module according to one of claims 1 to 10, further comprising a remote control (78) which is designed to operate the metering pumps (44, 50) from outside the interior space (22).

12. The functional module according to one of claims 1 to 11, further comprising a number of cover plates and cover flaps (29) which together form a housing top above the interior space (22), wherein a central area (30) of the interior space (22) is left open.

13. A mobile decontamination system for terrain decontamination, comprising a carrier vehicle on which a water tank (62) is mounted, and comprising a functional module according to one of claims 1 to 12, wherein the load-bearing frame (32) is attached to the water tank (62).

## Revendications

1. Module fonctionnel pour un système de décontamination mobile pour la décontamination des sols,
- comportant quatre profilés d'angle (12) qui couvrent une surface de contact avec le sol (14) rectangulaire,
- comportant quatre parois latérales (20) qui sont respectivement fixées par paires aux profilés d'angle (12) et qui définissent conjointement un espace intérieur (22) parallélépipédique, dans lequel chacune des quatre parois latérales (20) possède un côté extérieur (24) opposé à l'espace intérieur (822),
- comportant une pluralité de traverses (26) qui divisent l'espace intérieur (22) en compartiments (28) et forment, conjointement avec les parois latérales (20) et les profilés d'angle (12), un cadre porteur de charge (32),
- comportant un premier réservoir (34) qui est réalisé pour recevoir un premier produit chimique et qui possède une première sortie de réservoir (48), dans lequel le premier réservoir (34) est fixé au cadre porteur de charge (32) dans l'espace intérieur (22),
- comportant un autre réservoir (36a, 36b) qui est réalisé pour recevoir un second produit chimique et qui possède une autre sortie de réservoir (54a, 54b), dans lequel l'autre réservoir (36a, 36b) est fixé au cadre porteur de charge (32) dans l'espace intérieur (22),
- comportant une première pompe de dosage (44) qui est fixée dans l'espace intérieur (22) et qui est reliée côté aspiration à la première sortie de réservoir (48) par l'intermédiaire d'une première conduite (46),
- comportant une seconde pompe de dosage (50) qui est fixée dans l'espace intérieur (22) et qui est reliée côté aspiration à l'autre sortie de réservoir (54a, 54b) par l'intermédiaire d'une deuxième conduite (52),
- comportant une troisième conduite (58) qui est fixée dans l'espace intérieur (22) et qui est reliée à un raccord de sortie respectif de la première pompe de dosage (44) et de la seconde pompe de dosage (50),
**caractérisé par**
- un premier accouplement pour tuyau (40) qui est disposé sur l'un des côtés extérieurs (24) et qui forme une extrémité d'entrée de la troisième conduite (58),
- un second accouplement pour tuyau (42) qui est disposé sur l'un des côtés extérieurs (24) et qui forme une extrémité de sortie de la troisième conduite (58),
- une barre de pulvérisation (70) comportant une pluralité de buses de pulvérisation disposées côte à côte, et
- un premier tuyau de liaison (72),
dans lequel la rampe de pulvérisation (70) peut être reliée sélectivement au second accouplement pour tuyau (42) par l'intermédiaire du premier tuyau de liaison (72), et dans lequel le premier accouplement pour tuyau (40) est conçu pour raccorder un tuyau externe (64) à un réservoir d'eau séparé (62).

2. Module fonctionnel selon la revendication 1, comportant en outre une pompe à eau (60) qui est disposée dans la troisième conduite (58) et qui est conçue pour aspirer de l'eau du réservoir d'eau séparé (62) par l'intermédiaire du premier accouplement pour tuyau (40) et pour la transporter vers le second accouplement pour tuyau (42).

3. Module fonctionnel selon la revendication 2, dans lequel la pompe à eau (60) est une pompe à eau à entraînement hydraulique.

4. Module fonctionnel selon la revendication 3, comportant en outre deux raccords hydrauliques (66) qui conduisent à la pompe à eau (60) et qui sont disposés sur l'un des côtés extérieurs (24).

5. Module fonctionnel selon l'une des revendications 1 à 4, dans lequel le premier réservoir (34) possède une première ouverture de remplissage qui est fermée par une fermeture (38) pouvant être actionnée manuellement.

6. Module fonctionnel selon l'une des revendications 1 à 5, dans lequel le premier réservoir (34) possède une seconde ouverture de remplissage (80) à laquelle est raccordée une conduite de rinçage (84), dans lequel la conduite de rinçage (84) est reliée à la troisième conduite (58) par l'intermédiaire d'une vanne (86).

7. Module fonctionnel selon l'une des revendications 1 à 6, dans lequel une vanne d'arrêt est disposée au niveau de la première sortie de réservoir (48) et est conçue pour vider complètement le premier réservoir (48) lorsqu'il est fixé dans l'espace intérieur (22).

8. Module fonctionnel selon l'une des revendications 1 à 7, dans lequel l'autre réservoir (36a, 36b) comprend un premier autre réservoir (36a) et un second autre réservoir (36b) raccordés fluidiquement en parallèle à la troisième conduite (58).

9. Module fonctionnel selon l'une des revendications 1 à 8, dans lequel les profilés d'angle (12) comprennent des ferrures d'angle de conteneur qui sont conçues pour permettre une liaison par verrou tournant avec un conteneur de fret maritime.

10. Module fonctionnel selon l'une des revendications 1 à 9, comportant en outre un raccord électrique (74) disposé sur l'un des côtés extérieurs (24), et comportant un distributeur électrique (76) qui relie le raccord électrique (74) à la première et à la seconde pompe de dosage (44, 50), dans lequel le distributeur électrique (76) est disposé dans l'espace intérieur (22).

11. Module fonctionnel selon l'une des revendications 1 à 10, comportant en outre une télécommande (78) qui est configurée pour commander les pompes de dosage (44, 50) depuis l'extérieur de l'espace intérieur (22).

12. Module fonctionnel selon l'une des revendications 1 à 11, comportant en outre un certain nombre de plaques de recouvrement et de volets de recouvrement (29) qui forment ensemble un côté supérieur de boîtier au-dessus de l'espace intérieur (22), dans lequel une zone centrale (30) de l'espace intérieur (22) est évidée.

13. Système de décontamination mobile pour la décontamination des sols, comportant un véhicule porteur sur lequel est monté un réservoir d'eau (62), et comportant un module fonctionnel selon l'une des revendications 1 à 12, dans lequel le cadre porteur de charge (32) est fixé au réservoir d'eau (62).
